Europäisches Patentamt

European Patent Office

Office européen des brevets

(19)

(11) Veröffentlichungsnummer: **0 304 695**
**A1**

(12) # EUROPÄISCHE PATENTANMELDUNG

(21) Anmeldenummer: **88112653.6**

(51) Int. Cl.⁴: **G11B 5/596 , G11B 5/48**

(22) Anmeldetag: **03.08.88**

(30) Priorität: **17.08.87 DE 3727432**

(43) Veröffentlichungstag der Anmeldung:
**01.03.89 Patentblatt 89/09**

(84) Benannte Vertragsstaaten:
**AT CH DE FR GB IT LI NL**

(71) Anmelder: **Siemens Aktiengesellschaft Berlin und München**
**Wittelsbacherplatz 2**
**D-8000 München 2(DE)**

(72) Erfinder: **Diepers, Heinrich, Dr.**
**Veit-Stoss-Strasse 44**
**D-8552 Höchstadt(DE)**
Erfinder: **Stephani, Dietrich, Dr.**
**Hans-Birkmayr-Strasse 5**
**D-8526 Bubenreuth(DE)**

(54) **Magnetische Speichereinrichtung mit einem Spurführungssystem.**

(57) Die magnetische Speichereinrichtung enthält eine magnetisierbare Speicherplatte, einen Schreib-/Lese-Magnetkopf, der auf einem Flugkörper ange-ordnet ist, und ein Spurführungssystem. Dieses Sy-stem weist einen mit dem Magnetkopf starr verbun-denen Servo-Kopf auf, der mittels einer nachge-schalteten Elektronik auf mindestens einer Führungs-spur zu halten ist. Die Speichereinrichtung soll so ausgestaltet sein, daß eine exakte, kontinuierliche Führung ihres Magnetkopfes zu gewährleisten ist. Hierzu ist erfindungsgemäß vorgesehen, daß in die Speicherplatte (2) die mindestens eine gesonderte Führungsspur (8, 8a, 8b) eingeschrieben ist und daß der Flugkörper (13) an seiner Längsseite (21) mit dem Servo-Kopf (20) versehen ist, der als magneto-resistiver Sensor ausgebildet ist.

FIG 5

FIG 6

EP 0 304 695 A1

## Magnetische Speichereinrichtung mit einem Spurführungssystem

Die Erfindung bezieht sich auf eine magnetische Speichereinrichtung
- mit einer magnetisierbaren Speicherplatte,
- mit mindestens einem Schreib-/Lese-Magnetkopf, der auf einem aerodynamisch über die bewegte Speicherplatte hinweggleitenden Flugkörper angeordnet ist
und
- mit einem Spurführungssystem, das zur Führung des Magnetkopfes einen mit dem Magnetkopf starr verbundenen Servo-Kopf enthält, der mittels einer nachgeschalteten Elektronik auf mindestens einer Führungsspur zu halten ist.

Eine hochdichte Speicherung von Informationen (Daten) in plattenförmigen Aufzeichnungsmedien ist sowohl nach dem Prinzip einer longitudinalen (horizontalen) als auch insbesondere nach dem Prinzip einer senkrechten (vertikalen) Magnetisierung bekannt (vgl. z.B. "IEEE Transactions on Magnetics", Vol. MAG-16, No. 1, Januar 1980, Seiten 71 bis 76 oder Vol. MAG-20, No. 5, September 1984, Seiten 657 bis 662 und 675 bis 680). Die für diese Magnetisierungsarten zu verwendenden Schreib-/Lese-Magnetköpfe werden dabei vorteilhaft in Dünnfilmtechnik auf nicht-magnetischen Substraten ausgebildet. Dabei sollte der Abstand zwischen einem Magnetkopf und der Oberfläche der Speicherplatte äußerst klein gehalten werden können und insbesondere im Fall einer senkrechten Magnetisierungsart unter 1 $\mu$m liegen. Derartig geringe Abstände lassen sich aber praktisch nur dadurch gewährleisten, daß man das den Magnetkopf tragenden Substrat als Flugkörper gestaltet, der aerodynamisch über der sich unter ihm hinwegdrehenden Speicherplatte hinwegfliegt.

Hierzu wird vorteilhaft das Substrat auf seiner dem Aufzeichnungsmedium zugewandten Unterseite mit entsprechenden Gleit- bzw. Flugkufen ausgestattet (vgl. z.B. EP-A-0 137 051). Zur Führung eines solchen fliegenden Schreib-/Lese-Magnetkopfes einer entsprechenden magnetischen Speichereinrichtung ist folglich ein sogenannter Spurpositioner und im allgemeinen auch ein Spurhaltesystem erforderlich. Zur Spurpositionierung werden dabei überwiegend sogenannte Linear- oder Winkelpositionierer in Verbindung mit einer speziellen Servo-Platte eingesetzt. Diese Servo-Platte trägt ein fest eingeschriebenes Raster von Führungsspuren. Diese Spuren werden mit Hilfe eines geeigneten Servo-Kopfes gelesen, der in starrer mechanischer Verbindung mit dem Schreib-/Lese-Magnetkopf dafür sorgt, daß dieses Spurenraster auf die Datenoberfläche der eigentlichen Datenspeicherplatte übertragen wird und entsprechend beim Lesevorgang wieder gefunden werden kann.

Die Grenzen dieser Führungstechnik sind durch die mechanischen Toleranzen des Antriebssystems für die Speicher- und Servoplatte sowie für den Kopfpositionierer gegeben. Eine angestrebte weitere Steigerung der Spurdichte erfordert deshalb z.B. eine entsprechende Weiterentwicklung der Antriebsmechanik. Der in der Produktion zu treibende entsprechende Aufwand ist jedoch sehr hoch und somit kostenintensiv. Als Alternative hierzu sind auch zusätzliche Servo-Maßnahmen bekannt, bei denen die Speicherplatte selbst zur Spurführung herangezogen wird. Bei einer entsprechenden, auch als "Embedded Servo" bezeichneten Vorrichtung wird vor jedem Speicherblock eine zuvor fest eingeschriebene Servo-Information gelesen und zur Nachsteuerung der Spurpositionierung verwendet. Eine Variante dieser Technik ist z.B. in "Electronics", 13.11.1986, Seiten 81 bis 83 beschrieben. Dieses Servo-Prinzip setzt jedoch voraus, daß das Zusammenwirken von Antriebsmechanik und Kopfpositionierer in Grenzen von z.B. - 2 $\mu$m reproduzierbar ist. Betrachtet man jedoch die gegenwärtigen Entwicklungstendenzen, die insbesondere für das Prinzip einer senkrechten Magnetisierung zu Spurbreiten im Bereich von 10 $\mu$m und gegebenenfalls sogar noch darunter anstreben, so sind Servo-Systeme erforderlich, die eine kontinuierliche Nachführung des Schreib-/Lese-Magnetkopfes, ein sogenanntes "Track Locking", ermöglichen.

Aufgabe der vorliegenden Erfindung ist es somit, die magnetische Speichereinrichtung der eingangs genannten Art dahingehend auszugestalten, daß mit ihr eine solche kontinuierliche Nachführung zu gewährleisten ist.

Diese Aufgabe wird erfindungsgemäß dadurch gelöst, daß in die Speicherplatte die mindestens eine gesonderte Führungsspur eingeschrieben ist und daß der Flugkörper an seiner Längsseite mit dem Servo-Kopf versehen ist, der als magnetoresistiver Sensor ausgebildet ist.

Die mit dieser Ausgestaltung der magnetischen Speichereinrichtung verbundenen Vorteile sind insbesondere darin zu sehen, daß es für eine kontinuierliche Führung des Magnetkopfes keiner zusätzlichen Servoplatte bedarf, so daß das Antriebssystem der Speichereinrichtung und insbesondere die Führung des Magnetkopfes entsprechend vereinfacht ist. Die für die Führung erforderliche gesonderte Führungsspur kann dabei sehr schmal gehalten werden. Da sie innerhalb des stets vorhandenen Abstandsbereiches zwischen benachbarten Datenspuren liegt, ist hiermit nicht nur keine Einbuße an Speicherfläche, sondern ein Gewinn an Speicherfläche verbunden, da somit auch der gesamte Abstandsbereich entsprechend schmal auszubilden ist. Aufgrund der Anordnung des magneto-resistiven Sensors auf einer der Seitenflächen des Flugkörpers wird auch kein Teil der sehr eng bemessenen rückwärtigen Fläche des Flugkörpers beansprucht, die für den Magnetkopf zur Verfügung steht.

Mit dem erfindungsgemäßen Konstruktionsprinzip ergeben sich noch folgende weitere Vorteile:
- Das permanent wirkende Spurführungssystem ist hinsichtlich seiner konkreten Ausgestaltung, z.B. bezüglich seiner "Feedback-Frequenz" an die Gegebenheiten der jeweiligen Speichereinrichtung anpaßbar.
- Der Magnetkopf läßt sich in einfacher Weise auf eine bestimmte Spur durch Abzählen der Führungsspuren positionieren.
- Eine deutliche Erkennung der Spurabweichung ist möglich, da eine lineare Kennlinie zu erhalten ist.
- Eine Spurhaltung im Submikrometer-Bereich ist zu realisieren, die im wesentlichen nur abhängig von der Lagegenauigkeit der Führungsspuren ist.
- Aufgrund der exakten Spurhaltung ist auch eine Spurführung längs nicht-kreisrunder Spuren, wie sie z.B. auf Kunststoffsubstraten ausgebildet sind, möglich.
- Es bestehen keine hohen Anforderungen an radiale Toleranzmaße der Antriebs- und Positioniermechanik wie auch hinsichtlich einer Temperaturkonstanz. Aus diesem Grunde sind auch kürzere Positionierzeiten erreichbar, und die Positioniermechanik läßt sich gewichtsärmer ausbilden.
- Ein "Soft-Sektoring", d.h. letztlich ein Verzicht auf eine Sektoreneinteilung bzw. eine freie Wahl der Sektorlänge ist möglich.
- Führungsspur- und Datenspurinformationen werden mit getrennten Leseköpfen detektiert und verarbeitet. Es ist somit keine spezielle Filtertechnik erforderlich, so daß eine entsprechend große Freiheit bei der Auslegung der Magnetköpfe zum Schreiben und Lesen der Daten sowie bei der Auslegung der Servo-Köpfe besteht.

Vorteilhafte Ausgestaltungen der erfindungsgemäßen Speichereinrichtung gehen aus den Unteransprüchen hervor.

Zur weiteren Erläuterung der Erfindung wird nachfolgend auf die schematische Zeichnung Bezug genommen, die in Figur 1 eine Speicherplatte zeigt, von der in Figur 2 ein Ausschnitt vergrößert wiedergegeben ist. Die Figuren 3 und 4 zeigen jeweils Servo-Spuren der Speicherplatte. In Figur 5 ist ein Flugkörper einer Speichereinrichtung angedeutet, während Figur 6 die Anordnung dieses Flugkörpers über einer Speicherplatte zeigt. In den Figuren 7 und 8 ist jeweils eine Ausführungsform eines Servo-Kopfes näher veranschaulicht. Die Figur 9 zeigt die Kennlinie eines Servo-Kopfes. In Figur 10 ist ein Verfahrensschritt zur Herstellung von Servo-Köpfen angedeutet. Die Figuren 11 bis 16 zeigen Ausbildungsmöglichkeiten von Köpfen zum Schreiben von Servo-Spuren. In den Figuren sind übereinstimmende Teile mit denselben Bezugszeichen versehen.

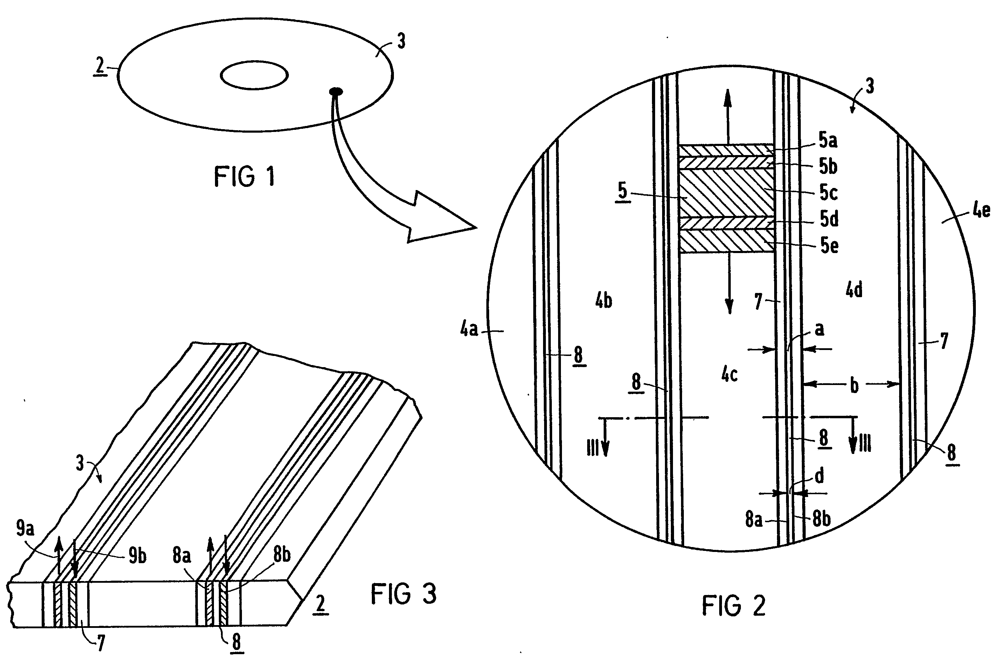

Figur 1 zeigt in Schrägansicht eine nicht näher ausgeführte Speicherplatte 2 einer erfindungsgemäßen magnetischen Speichereinrichtung. Von der Datenträgeroberfläche 3 dieser Platte 2 ist in Figur 2 ein Ausschnitt wiedergegeben.

Aus diesem in Figur 2 als Aufsicht auf die Datenträgeroberfläche gezeigten Ausschnitt sind fünf Datenspuren 4a bis 4e ersichtlich, die aus einem für das gewählte Magnetisierungsprinzip geeigneten Material bestehen. Gemäß dem gewählten Ausführungsbeispiel sei angenommen, daß es sich um vertikal zu magnetisierendes CoCr handelt. In der Figur ist von der Datenspur 4c ein Datenspurabschnitt 5 mit entsprechend magnetisierten Datenblöcken 5a bis 5e angedeutet. Die Breite b jeder Datenspur senkrecht zur relativen Bewegungsrichtung eines entsprechenden Magnetkopfes bezüglich der Längsrichtung der Spur liegt dabei in der Größenordnung von etwa 10 $\mu$m. Zwischen benachbarten Datenspuren ist jeweils ein schmaler Abstandsbereich 7 ausgebildet, der eine Querausdehnung a von etwa 2 bis 3 $\mu$m hat. In diese Abstandsbereiche 7, die auch als "Rasen" bezeichnet werden, sind in Längsrichtung Doppelspuren 8 geschrieben, die jeweils zwei parallele, durchgehende, auch als Servo-Spuren bezeichnete Führungsspuren 8a und 8b aufweisen. Diese Servo-Spuren liegen dicht nebeneinander und sind vertikal in entgegengesetzter Richtung magnetisiert. Der entsprechende Schreibvorgang zur Magnetisierung dieser Spuren kann z.B. in einem einzigen Lauf mit einem um 90° verdreht angeordneten, bekannten Schreib-/ Lese-Magnetkopf durchgeführt werden. Hierbei sollten vorteilhaft beide Magnetschenkel des Kopfes ein gleichstarkes, entgegengesetzt gerichtetes Magnetfeld haben. Die Spaltweite zwischen den beiden Magnetschenkeln eines solchen Kopfes bestimmt dabei im wesentlichen die gegenseitige Distanz der beiden erzeugten Servo-Spuren 8a und 8b. Die Distanz d liegt dabei im allgemeinen unter 1 $\mu$m.

Figur 3 zeigt einen Schnitt, der über zwei Abstandsbereiche 7 längs einer in Figur 2 mit III-III gekennzeichneten Schnittlinie gelegt ist. In Figur 3 sind die entgegengesetzten Magnetisierungsrichtungen der paarweise parallelen Servo-Spuren 8a, 8b durch gepfeilte Linien 9a bzw. 9b veranschaulicht.

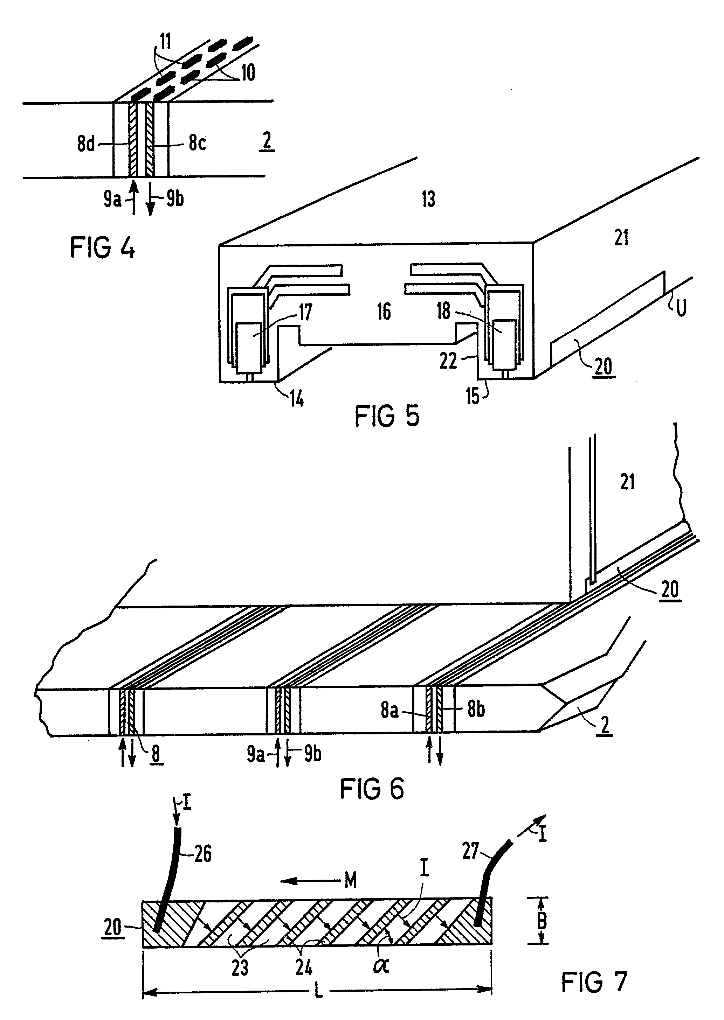

Aus Figur 4 geht eine alternative Ausführungsmöglichkeit zu den in Figur 3 gezeigten Servo-Doppelspuren in entsprechender Darstellung hervor. Die beiden parallel in Führungsrichtung verlaufenden Servo-Spuren dieser Doppelspur brauchen nämlich nicht unbedingt als durchgehende Spuren gestaltet zu sein. Wie aus Figur 4 deutlich ersichtlich ist, läßt sich jede der beiden parallelen Servo-Spuren 8c, 8d auch in einzelne, in Führungsrichtung hintereinanderliegende, untereinander geringfügig beabstandete Signalabschnitte 10 bzw. 11 unterteilen. Werden solche unterbrochene Servo-Spuren bei konstanter Drehzahl und konstanter Frequenz geschrieben, so kann man vorteilhaft ein "On track"-Triggersignal zur Stabilisierung der Drehzahl im späteren Einsatz gewinnen. Damit lassen sich z.B. Bitshift- Fehler reduzieren.

Figur 5 zeigt eine Schrägansicht auf ein als Flugkörper 13 gestaltetes Substrat aus beispielsweise nicht-magnetischem Material. An der Unterseite dieses Flugkörpers sind zwei Flugkufen 14 und 15 ausgebildet, die ein aerodynamisches Gleiten des Flugkörpers über einer Speicherplatte ermöglichen. Auf der in relativer Bewegungsrichtung des Flugkörpers bezüglich der Speicherplatte gesehen rückwärtigen Flachseite 16 sind im Bereich der Flugkufen 14 und 15 je ein Schreib-/Lese-Magnetkopf 17 bzw. 18 angeordnet. Gegebenenfalls kann es sich bei einem dieser Magnetköpfe, z.B. bei dem Kopf 17 um einen blinden Kopf ohne Funktion handeln. Dieser Kopf kann somit eventuell auch weggelassen werden. Mit dem mindestens einen Magnetkopf, beispielsweise dem Kopf 18, ist je nach gewähltem Magnetisierungsprinzip, also z.B. vertikal, die unter ihm hinweggeführte Speicherplatte zu beschreiben oder auszulesen. Zu einer exakten Führung des Flugkörpers 13 bzw. des Magnetkopfes 18 längs einer entsprechenden Datenspur dient erfindungsgemäß ein an sich bekannter, als magneto-resistiver Sensor ausgebildeter Servo-Kopf 20. Dieser Servo-Kopf soll erfindungsgemäß an einer der Längsseiten 21 des Flugkörpers 13 der Speicherplatte zugewandt angeordnet sein, wobei er an die Unterkante U des Flugkörpers angrenzt. Gemäß dem dargestellten Ausführungsbeispiel liegt somit der Servo-Kopf 20 an der Außenseite der Flugkufe 15. Es ist jedoch ebensogut möglich, einen entsprechenden Servo-Kopf an der Innenseite 22 dieser Kufe anzuordnen.

Figur 6 zeigt in Schrägansicht die Positionierung des aus Figur 5 ersichtlichen Servo-Kopfes 20 über einer Speicherplatte 2, die gemäß Figur 3 ausgestaltet ist. Die Idealposition dieses Servo-Kopfes 20 und damit des mindestens einen zugeordneten Schreib-/ Lese-Magnetkopfes ist gegeben, wenn sich der Servo-Kopf genau zwischen den Servo-Spuren 8a und 8b befindet. Abweichungen nach rechts oder links führen dann zu positiven oder negativen Signalen an dem Servo-Kopf bzw. seiner nachgeschalteten Elektronik. Damit lassen sich Betrag und Richtung der Abweichung von der Idealposition erkennen und gegebenenfalls korrigieren (vgl. auch Figur 9).

Eine Ausführungsform des als magneto-resistiver Sensor ausgebildeten Servo-Kopfes 20 nach Figur 5 oder 6 ist in Figur 7 in Aufsicht näher veranschaulicht. Vorteilhaft kann dieser Sensor in einer als "Barber-Pole" bekannten Struktur ausgeführt sein (vgl. z.B. "IEEE Transactions on Magnetics", Vol. MAG-11, No. 5, September 1975, Seiten 1215 bis 1217 oder Vol. MAG-17, No. 6, November 1981, Seiten 2884 bis 2889). Ein entsprechendes Element zeichnet sich durch eine Schicht bzw. Fläche 23 aus einem magneto-resistiven Material wie z.B. aus einer NiFe-Legierung aus. Dabei besteht im allgemeinen die Schicht 23 sandwichartig aus mehreren dünnen Filmen aus dem magneto-resistiven Material, die jeweils durch dünne Isolationnsfilme z.B. aus $SiO_2$ getrennt sind. Auf die Fläche sind schmale Streifen 24 aus elektrisch gut leitendem Material wie z.B. aus Au aufgebracht. Diese Leiterstreifen 24 sind untereinander beabstandet und unter einem Winkel $\alpha$ von insbesondere 45° bezüglich der leichten Achse der Magnetisierung M des magneto-resistiven Materials der Fläche 23 angeordnet. Ein senkrecht zwischen den Leiterstreifen 24 fließender Strom I wird somit gezwungen, diesen Winkel $\alpha$ bezüglich der Magnetisierungseinrichtung M einzunehmen. In der Figur sind außerdem noch seitliche Anschlußleiter 26 und 27 des magneto-resistiven Sensors angedeutet.

Typische Abmessungen eines solchen etwa 25 bis 50 nm dicken, als Servo-Kopf 20 dienenden Sensors sind vorzugsweise in Verbindung mit einem Linearpositionierer: Longitudinale Länge L: etwa 10 bis 100 $\mu$m; vertikale Breite B: etwa 10 bis 50 $\mu$m.

Bei Verwendung eines Drehpositionierers werden kürzere Längen unter 10 $\mu$m bevorzugt, um Signalabschwächungen durch variable, von Spur zu Spur sich ändernde Skew-Winkel zu minimieren.

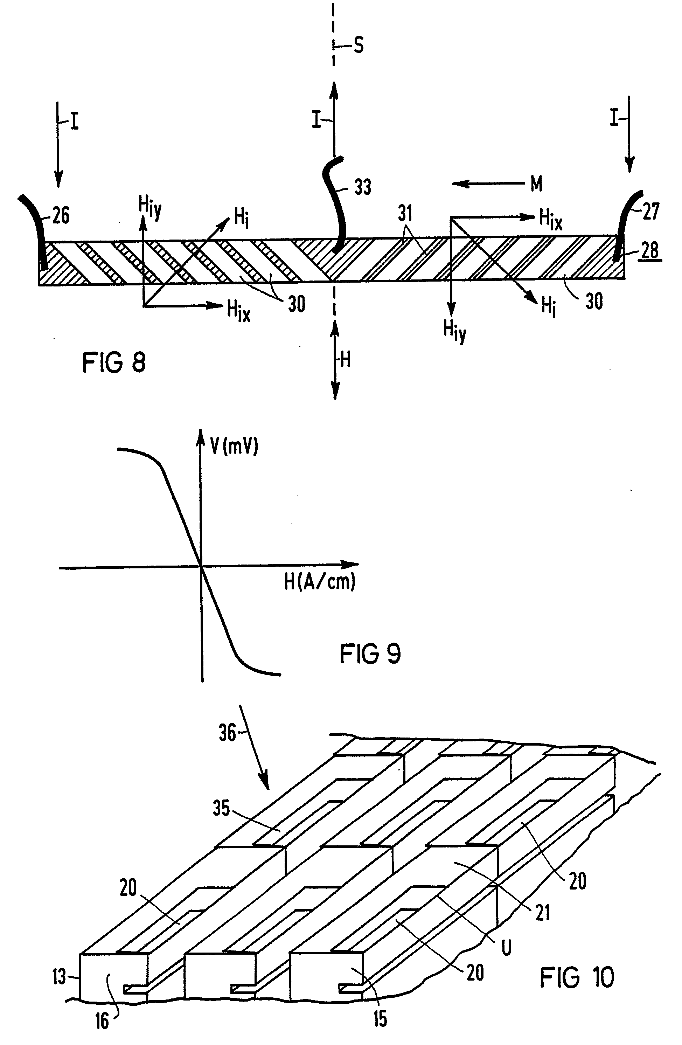

Eine weitere Ausführungsform eines als Servo-Kopf dienenden magneto-resistiven Sensors geht aus der Aufsicht aus Figur 8 hervor. Dieser Servo-Kopf 28 wird von einem Element gebildet, das bezüglich einer Symmetrieebene S spiegelbildlich aufgebaut ist (vgl. z.B. "IEEE Transactions on Magnetics", Vol. MAG-18, No. 2, März 1982, Seiten 763 bis 768). Der Servo-Kopf 28 enthält ebenfalls eine magneto-resistive Schicht bzw. Fläche 30, auf der parallele Leiterstreifen 31 schräg bezüglich der leichten Achse M der Magnetisierung angeordnet sind. In einem senkrechten Feld H, wie es von einer Servo-Doppelspur hervorgerufen wird, werden dann in diesem Sensor die in der Figur eingetragenen Feldkomponenten $H_{iy}$ in Richtung des Feldes H, $H_{ix}$ in Querrichtung dazu und $H_i$ in Stromführungsrichtung induziert. In der Figur sind ferner die Flußrichtungen eines Stromes I an seitlichen Anschlußleitern 26 und 27 und einem mittleren Anschlußleiter 33 durch gepfeilte Linien angedeutet.

Wird ein solcher Servo-Kopf 28 über einer Servo-Doppelspur 8 gemäß Figur 3 oder 4 hinweggeführt, so treten an seinen Anschlußleitern 26, 27, 33 Spannungsverhältnisse auf, die aus der in Figur 9 ersichtlichen Kennlinie seines Sensors abzulesen sind (vgl. auch "NTG-Fachberichte", Band 76, Seiten 69 bis 75). Diese Kennlinie ist in einem Diagramm wiedergegeben, wobei auf der Abszisse das Magnetfeld H der Servo-Doppelspur und auf der Ordinate die zwischen den Anschlußleitern auftretende Signal- oder Anschlußspannung V eingetragen sind. Befindet sich der Servo-Kopf exakt in seiner Idealposition, wo sich die Felder der beiden parallelen Servo-Spuren gerade aufheben, so tritt kein Signal an den Anschlußleitern auf. Wie aus der Figur deutlich hervorgeht, verläuft die Anschlußspannung V in einem verhältnismäßig weiten Bereich des H-Feldes zumindest weitgehend linear. Eine solche Kennlinie läßt sich vorteilhaft für eine exakte Spurführung mittels einer dem Sensor des Servo-Kopfes nachgeschalteten Elektronik ausnutzen.

Bild 10 zeigt in Schrägansicht eine Möglichkeit zu einer großtechnischen Herstellung von magneto-resistiven Sensoren 20 oder 28 auf den Außenkanten von Schreib-/Lese-Köpfe tragenden Flugkufen 15. Das Sensormaterial, z.B. NiFe im Verhältnis 81/19, wird schräg durch Öffnungen 35 von Masken aufgedampft. Der Dampfstrahl 36 ist dabei sowohl nach oben wie auch zur. linken Seite hin geneigt, so daß die Frontkanten und die Kufenkanten der Flugkörper 13 Schattenwurfkanten darstellen. Aus diesem Grunde sind die Flugkörper vorzugsweise auf Abstand gesetzt. Eine weitere Möglichkeit der Herstellung ist das Aufsputtern mittels HF-Plasma. Hierbei sind die Flugkörper 13 vorzugsweise dicht gepackt, um eine Bedeckung der Flugunterkanten und der rückwärtigen Stirnseiten mit den Schreib-/Lese-Magnetköpfen zu vermeiden. Die Magnetköpfe sind in der Figur nicht ausgeführt.

In jedem Fall werden die eigentlichen, als Servo-Köpfe dienenden magneto-resistiven Sensorelemente durch Laserstrahltrennung aus dem Aufdampffleck exakt und von Flugkörper zu Flugkörper reproduzierbar herausgeschnitten. Das Aufbringen der Streifenmetallisierung z.B. aus Au oder anderen geeigneten Leitermaterialien zur Ausbildung der Leiterstreifen 24 oder 31 der als Barber-Pole gestalteten Sensoren erfolgt ebenfalls durch Aufdampfen oder Sputtern und nachträgliche Strukturierung durch bekannten Dünnfilm-Lithographie bzw. Dünnfilm-Lift off-Technik. Es können auch andere Verfahren wie z.B. laserunterstützte Plasmaabscheidung ("Laser enhanced plasma Deposition") oder chemische Dampfabscheidung mit laserunterstütztem Plasma ("Laser enhanced plasma CVD") eingesetzt werden. Hierbei können vorteilhaft die einzelnen Leiterbahnen der Sensoren direkt geschrieben werden.

Die magneto-resistiven Schichten 23 oder 30 aus z.B. NiFe werden vorzugsweise in Doppellage aufgebracht, wobei eine isolierende Zwischenlage z.B. aus 0,01 bis 0,05 $\mu$m dicken $SiO_2$ vorgesehen wird. Hierdurch werden vorteilhaft Abschlußdomänen vermieden. Domänenbewegungen bzw. -blockierungen erzeugen nämlich Hysterese und Nichtlinearitäten in der Kennlinie. Entsprechend den bei der Herstellung der Schreib-/Lese-Magnetköpfe angewendeten Sputterbedingungen wird eine Minimierung der Magnetostriktion der NiFe-Schichten angestrebt. Dies führt vorteilhaft zu einer Eindomänenschicht oder reduziert zumindest die Domänenaufspaltung bei Auf- und Abmagnetisierungen.

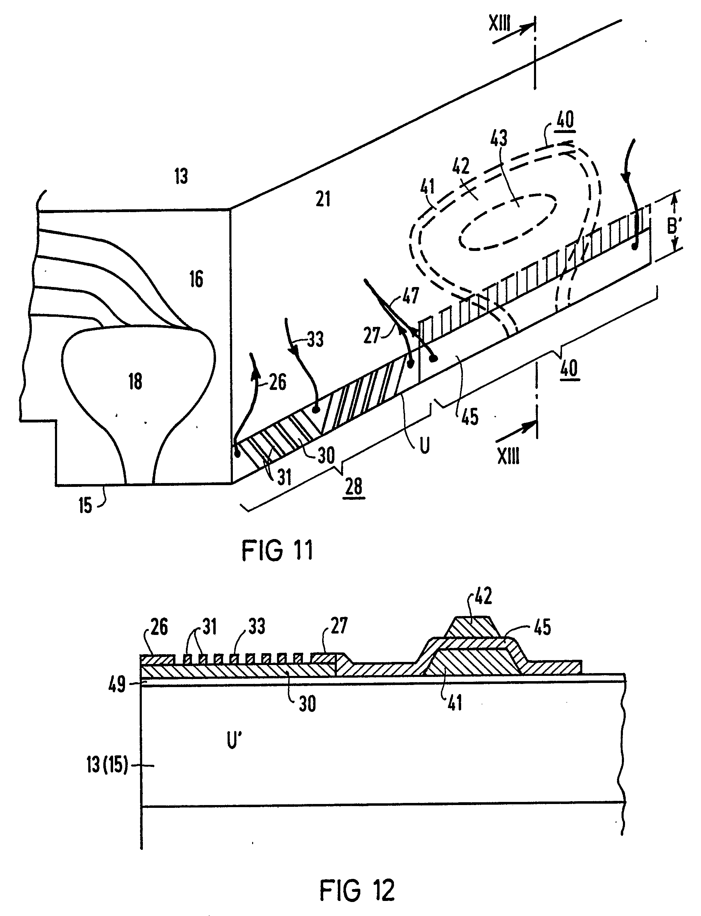

Gemäß den dargestellten Ausführungsbeispielen nach den Figuren 2 bis 6 wurde davon ausgegangen, daß die Servo-Doppelspuren 8 von einem von dem dargestellten Flugkörper unabhängigen Schreibkopf in die Speicherplatte eingeschrieben werden. Ebenso ist es jedoch auch möglich, einen hierfür erforderlichen Schreibkopf direkt an dem Flugkörper anzuordnen, welcher den Servo-Kopf und mindestens einen Schreib-/Lese-Magnetkopf trägt. Ein entsprechendes System von Köpfen auf einem Flugkörper ist den in den Figuren 11 bis 16 gezeigten Ausführungsbeispielen zugrundegelegt.

Figur 11 zeigt in Schrägansicht einen Ausschnitt eines Flugkörpers 13, der auf seiner rückwärtigen Flachseite 16 im Bereich seiner Flugkufe 15 mit einem nur angedeuteten Schreib-/Lese-Magnetkopf 18 versehen ist. Auf seiner Längsseite 21 trägt der Flugkörper 13 außerdem einen Servo-Kopf 28 mit Anschlußleitern 26, 27 und 33, wie er z.B. aus Figur 8 hervorgeht. Ferner ist auf der Flugkörperlängsseite 21 noch ein als rein induktiv wirksamer Sensor gestalteter Schreibkopf 40 angeordnet. Dieser Kopf soll ausschließlich zum Schreiben einer Servo-Doppelspur dienen, wie sie z.B. in den Figuren 2 bis 4 und 6 veranschaulicht ist. Der Spur-Schreibkopf 40 enthält einen unteren und einen oberen Polschenkel 41 bzw. 42 aus ferromagnetischem Material wie z.B. NiFe. Diese Schenkel bilden auf der einem Aufzeichnungsmedium abgewandten Seite in einem Verbindungsbereich 43 einen gemeinsamen Polrückschluß. Außerhalb dieses Bereiches sind die beiden Polschenkel 41 und 42 beabstandet, wobei sich durch einen dem Aufzeichnungsmedium zugewandten Spaltbereich eine als Schreib- oder Erregerwindung dienende Leiterschleife 45 erstreckt. Diese Leiterschleife wird von einem dünnen, parallel zur Unterkante U der Längsseite 21 verlaufenden Leiterband mit vertikaler Breite B' gebildet. Das Leiterband ist außerhalb des Kopfbereiches mit zwei Anschlußleitern 46 und 47 verbunden, so daß ein längs der Unterkante U fließender Erregerstrom I' durch die Leiterschleife 45 zu führen ist. Wie in der Figur ferner angedeutet ist, kann gegebenenfalls der Anschlußleiter 47 der Leiterschleife 45, der benachbart zu dem Servo-Kopf 28 und somit zu dessen Anschlußleiter 27 verläuft, mit diesem Anschlußleiter 27 zu einem gemeinsamen Anschlußleiter zusammengefaßt sein.

Zur Verdeutlichung der Anordnung des Schreibkopfes 40 und des Servo-Kopfes 28 sind diese Teile aus Figur 11 in Figur 12 als Draufsicht auf die Unterseite U' der Flugkufe 15 veranschaulicht. In dieser Figur ist ferner noch eine Isolatorschicht 49 ersichtlich, die das Material des Flugkörpers bzw. seiner Flugkufe 15 von dem Material des Servo-Kopfes 28 und des Spur-Schreibkopfes 40 trennt. Wie aus der Figur ferner hervorgeht, liegt die Leiterschleife 45 des Spur-Schreibkopfes vorteilhaft zumindest annähernd in derselben Ebene parallel zur Längsseite 21 wie die Leiterstreifen 31 des Servo-Kopfes. Auf diese Weise wird gewährleistet, daß eine Spurführung relativ zu einer Datenspur unverändert bleibt.

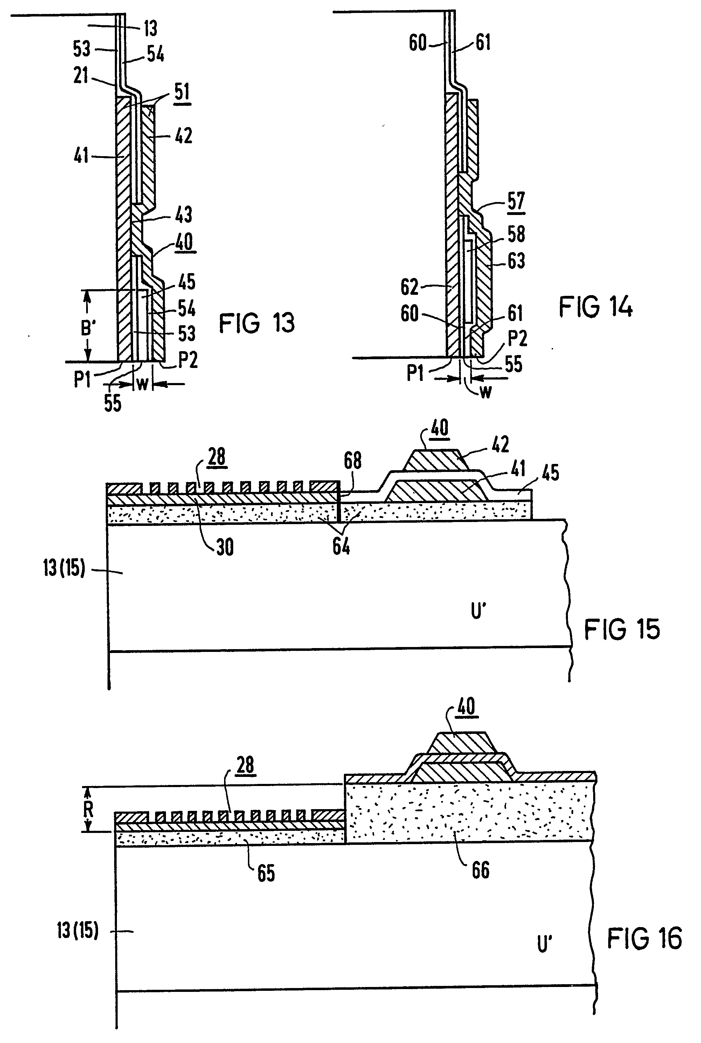

Aus Figur 13 ist ein Schnitt durch den in Figur 10 gezeigten Spur-Schreibkopf 40 ersichtlich, wobei die Schnittlinie längs der in Figur 10 mit XIII-XIII gekennzeichneten Schnittlinie ausgeführt ist. Aus der Figur 13 geht der sehr einfache Aufbau des Schreibkopfes 40 hervor. Dieser Kopf enthält im wesentlichen nur einen jochartigen magnetischen Leitkörper 51 aus den beiden Polschenkeln 41 und 42. Diese Polschenkel sind dabei vorteilhaft sandwichartig aus dünnen Filmen aus ferromagnetischem Material wie z.B. NiFe aufgebaut, wobei die dünnen Filme jeweils durch einen isolierenden Film, z.B. aus $SiO_2$, getrennt sind. Die Leiterschleife 45 stellt dabei eine einzige, geeignet groß dimensionierte Erregerwindung dar. Diese Windung z.B. aus Cu ist beidseitig gegen das Magnetmaterial der Polschenkel 41 und 42 durch Isolationsschichten 53 bzw. 54 z.B. aus $SiO_2$ isoliert. Die Erregerwindung ist bei dieser Ausführungsform bis zu den einem Aufzeichnungsmedium zugewandten Polspitzen P1, P2 der Polschenkel 41 und 42 vorgezogen. Folglich bestimmt im wesentlichen die Dicke dieser Leiterschleife die Weite w des zwischen den Polspitzen P1 und P2 ausgebildeten Spaltes 55. Wie aus der Figur ferner hervorgeht, sind die beiden Isolationsschichten 53 und 54 auch in einem Zwischenraum angeordnet, der auf der dem Aufzeichnungsmedium abgewandten, außerhalb des Verbindungsbereiches 43 liegenden Seite der beiden Polschenkel 41 und 42 ausgebildet ist.

Aus Figur 14 geht eine weitere Ausführungsform eines Spur-Schreibkopfes 57 in Figur 13 entsprechender Darstellung hervor. Dieser Schreibkopf 57 unterscheidet sich gegenüber dem Schreibkopf 40 im wesentlichen nur dadurch, daß sich seine als Erregerwindung dienende Leiterschleife 58 nicht bis in den Bereich der beiden Polspitzen P1 und P2 erstreckt. Die Spaltweite w' seines Spaltes 55 zwischen diesen beiden Polspitzen wird demnach nur durch die Dicke der Isolationsschichten 60 und 61 bestimmt, mit denen die Leiterschleife 58 gegenüber dem ferromagnetischen Material zweier Polschenkel 62 und 63 isoliert ist. Diese Ausführungsform ist insbesondere dann von Vorteil, wenn eine besonders präzise, schnelle und eng tolerierte Spurnachführung gefordert ist. Die beiden Servo-Spuren einer Doppelspur mit unterschiedlicher Magnetisierungsrichtung liegen dann nämlich entsprechend eng beieinander.

Nachfolgend sind verschiedene Ausführungsvarianten wesentlicher Schritte zu einer gemeinsamen Herstellung von Servo-Köpfen und Spur-Schreibköpfen skizziert:

Ausführung 1 (gemäß den Figuren 11 bis 13)

- Aussputtern einer Isolatorschicht 49 aus $Al_2O_3$, falls der Flugkörper 13 aus elektrisch leitendem Material besteht.
- Ausbildung der magneto-resistiven Schicht 30 mit einem sandwichartigen Aufbau durch sukzessives Aufsputtern von Filmen aus NiFe bzw. $SiO_2$.
- Formierung der magneto-resistiven Sensorfläche durch Lithographie und Mikrostrukturierung.
- Herstellung des unteren Polschenkels 41 des Spur-Schreibkopfes 40 mittels bekannter "Lift-off"-Technik. Hierbei Aufbringen einer z.B. 0,5 bis 1 μm starken NiFe-Schicht durch Sputtern.
- Aufsputtern einer $SiO_2$-Isolationsschicht 53 von z.B. 0,1 μm Stärke und Mikrostrukturierung dieser Schicht so, daß der untere Polschenkel 41 zunächst voll bedeckt wird und dann die Öffnung des Verbindungsbereiches 43 für den Polrückschluß freigelegt wird.
- Ganzflächiges Aufsputtern oder Aufdampfen einer Schicht z.B. aus Cu und anschließende Mikrostrukturierung der Barber-Pole-Geometrie des Servo-Kopfes 28 sowie der als Erregerwindung dienenden Leiterschleife 45 des Spur-Schreibkopfes 40. Dabei kann die vertikale Breite B' der Leiterschleife 45 entsprechend dem geforderten Erregerstrom und den auftretenden Verlustleistungen angepaßt werden.
- Aufbringen und Mikrostrukturierung der zweiten Isolator schicht 54 zur Isolation der Leiterschleife 45 im Polbereich von dem oberen Polschenkel 42. Auch diese Isolationsschicht ist in dem Verbindungsbereich 43 zu entfernen.
- Aufbringen durch Sputtern oder Aufdampfen einer zweiten NiFe-Schicht in etwa gleicher Stärke wie die erste NiFe-Schicht des unteren Polschenkels 41 und anschließende Mikrostrukturierung des oberen Polschenkels 42 nach bekannten Technologien.

- Aufsputtern einer Al$_2$O$_3$-Schicht als Schutzschicht.
- Nacharbeit der Flugkufenunterkante U bzw. -unterseite U' durch mechanisches Nacharbeiten der Flugkufe 15.

Die insbesondere in der Figur 13 veranschaulichte Ausführungsform ist dann anzuwenden, wenn durch einen Servo-Positionierer oder andere Steuervorrichtungen ein Spurraster beim Schreiben der Servo-Spuren eingestellt wird.

Ausführung 2 (gemäß den Figuren 11, 12 und 14)

Die insbesondere in Figur 13 gezeigte Ausführungsform erlaubt das Schreiben einer ersten Spur "0" z.B. als innerste Spur und danach, bei jeder weiteren Spur das Lesen der zuvor geschriebenen Spur mittels des Servo-Kopfes und gleichzeitig Schreiben einer neuen Spur mit dem Schreibkopf. Zur Herstellung dieser Ausführungsform sind folgende Änderungen in der Herstellungsschrittfolge notwendig:
- Herstellen des Servo-Kopfes, wie zu Figur 10 beschrieben.
- Aufsputtern einer Al$_2$O$_3$-Isolatorschicht in einer Stärke, die dem gewünschten Spurraster entspricht.
- Herstellung des Spur-Schreibkopfes, wie unter Ausführungs 1 beschrieben.

Ausführung 3 (gemäß Figur 15)

Aus Figur 15 ist eine Aufsicht auf einen Servo-Kopf 28 und einen zugeordneten Spur-Schreibkopf 40 in Figur 12 entsprechender Darstellung ersichtlich. Abweichend von der Darstellung nach Figur 12 können die beiden an einer Stoßstelle 68 aneinandergrenzenden Köpfe auf mindestens einem dünnen Glassubstrat 64 in Vielfachanordnung hergestellt werden. Hierzu sind die Herstellungsschritte wie unter Ausführung 1 oder unter Ausführung 2 beschrieben zu wählen.
- Auftrennen durch mechanisches Mikrosägen in einzelne Elemente (mit Servo-Kopf und Spur-Schreibkopf).
- Aufkontaktieren auf die Seitenfläche 21 des Flugkörpers 13, wobei je nach verwendetem Flugkörper-Material und der Flächenebenheit von Flugkörper und Glassubstrat 64 ein bloßes Anhaften ausreichenden Kraftschluß liefern kann.
Exaktes Positionieren auf die Flugkufenunterkante ist erforderlich.

Ausführung 4 (gemäß Figur 16)

In Figur 15 ist ebenfalls eine Aufsicht auf die Flugkufenunterseite U' eines Flugkörpers 13 mit einem Servo-Kopf 28 und einem Spur-Schreibkopf 40 ersichtlich. Im Gegensatz zu der Ausbildung nach Figur 14 sind jedoch der Servo-Kopf 28 und der Schreibkopf 40 auf unterschiedlich dicken Glassubstraten 65 und 66 hergestellt. Die Dickendifferenz R der Glassubstrate 65 und 66 wird dabei entsprechend dem geforderten Spurraster gewählt.

Statt verschieden dicker Substrate 65 und 66 aus Glas können hierfür gegebenenfalls auch Substrate aus 2 bis 7 μm dicken Kunststofffolien wie z.B. aus Kapton oder Polyäthylen vorgesehen werden.

Gemäß den den Figuren 1 bis 16 zugrundegelegten Ausführungsbeispielen wurde davon ausgegangen, daß sich die erfindungsgemäßen Maßnahmen auf ein Speichersystem beziehen sollen, das nach dem Prinzip einer vertikalen Magnetisierung betrieben wird. Prinzipiell sind die erfindungsgemäßen Maßnahmen jedoch auch für das Prinzip einer longitudinalen Magnetisierung zu verwenden. Hierbei werden vorteilhaft jeweils drei Servo-Spuren eingeschrieben, um so zwei Magnetisierungsübergänge zu gewinnen. Ein als magneto-resistiver Sensor ausgebildeter Servo-Kopf wird dann auf die mittlere dieser drei Servo-Spuren gesetzt.

**Ansprüche**

1. Magnetische Speichereinrichtung
- mit einer magnetisierbaren Speicherplatte,
- mit mindestens einem Schreib-/Lese-Magnetkopf, der auf einem aerodynamisch über die bewegte Speicherplatte hinweggleitenden Flugkörper angeordnet ist,
und
- mit einem Spurführungssystem, das zur Führung des Magnetkopfes einen mit dem Magnetkopf starr verbundenen Servo-Kopf enthält, der mittels einer nachgeschalteten Elektronik auf mindestens einer Führungsspur zu halten ist,
**dadurch gekennzeichnet,** daß in die Speicherplatte (2) die mindestens eine gesonderte Führungsspur (8, 8a - 8d) eingeschrieben ist und daß der Flugkörper (13) an seiner Längsseite (21) mit dem Servo-Kopf (20, 28) versehen ist, der als magneto-resitiver Sensor ausgebildet ist.

2. Speichereinrichtung nach Anspruch 1, **dadurch gekennzeichnet,** daß die Speicherplatte (2) senkrecht (vertikal) zu magnetisieren ist und daß die Führungsspur als Servo-Doppelspur (8) mit zwei parallelen Servo-Spuren (8a, 8b; 8c, 8d) ausgebildet ist, die antiparallele Magnetisierungsrichtungen (9a, 9b) aufweisen.

3. Speichereinrichtung nach Anspruch 1, **dadurch gekennzeichnet,** daß die Speicherplatte (2) longitudinal (horizontal) zu magnetisieren ist und daß die Führungsspur von drei parallelen Servo-Spuren gebildet ist, wobei benachbarte Servo-Spuren jeweils antiparallele Magnetisierungsrichtungen aufweisen.

4. Speichereinrichtung nach einem der Ansprüche 1 bis 3, **dadurch gekennzeichnet,** daß die Füh rungsspur (8) in einem Abstandsbereich (7) zwischen parallelen Datenspuren (4a bis 4e) angeordnet ist.

5. Speichereinrichtung nach einem der Ansprüche 1 bis 4, **dadurch gekennzeichnet,** daß der Servo-Kopf (20, 28) als magneto-resistiver Sensor vom Barber-Pole-Typ ausgebildet ist.

6. Speichereinrichtung nach Anspruch 5, **dadurch gekennzeichnet,** daß der Servo-Kopf (28) spiegelbildlich bezüglich einer Symmetrieebene (S) ausgebildet ist.

7. Speichereinrichtung nach einem der Ansprüche 1 bis 6, **dadurch gekennzeichnet,** daß der Servo-Kopf (20, 28) als Dünnschicht-Struktur ausgebildet ist.

8. Speichereinrichtung nach einem der Ansprüche 1 bis 7, **dadurch gekennzeichnet,** daß der Flugkörper (13) an seiner Längsseite (21) zusätzlich zu dem Servo-Kopf (20, 28) mit einem gesonderten Spur-Schreibkopf (40, 57) zum Schreiben der Führungsspur (8) versehen ist.

9. Speichereinrichtung nach Anspruch 8, **dadurch gekennzeichnet,** daß der Spur-Schreibkopf (40, 57) als induktiver Sensor mit einer der Anzahl der Servo-Spuren (8a bis 8e) einer Führungsspur (8) entsprechenden Anzahl von Polschenkeln (41, 42; 62, 63) gestaltet ist.

10. Speichereinrichtung nach Anspruch 9, **dadurch gekennzeichnet,** daß die Polschenkel (41, 42; 62, 63) lediglich in einem der Speicherplatte (2) abgewandten Verbindungsbereich (43) aneinandergefügt und außerhalb dieses Bereiches beabstandet sind und daß sich zwischen beabstandeten, der Speicherplatte zugewandten Teilen dieser Polschenkel minde stens eine Leiterschleife (45, 58) als Erregerwindung erstreckt.

11. Speichereinrichtung nach Anspruch 10, **dadurch gekennzeichnet,** daß als Leiterschleife (45, 58) eine einzige Leiterbahn vorgesehen ist.

12. Speichereinrichtung nach Anspruch 10 oder 11, **dadurch gekennzeichnet,** daß sich die Leiterschleife (45, 58) bis in den Bereich der von den Polschenkeln (41, 42) ausgebildeten, der Speicherplatte (2) zugewandten Polspitzen (P1, P2) erstreckt (Figur 13).

13. Speichereinrichtung nach einem der Ansprüche 10 bis 12, **dadurch gekennzeichnet,** daß sich die Leiterschleife (58) durch einen Zwischenraum zwischen den Polschenkeln (62, 63) erstreckt, der außerhalb eines Bereiches liegt, welcher von der Speicherplatte (2) zugewandten Polspitzen (P1, P2) der Polschenkel (62, 63) eingenommen ist (Figur 14).

14. Speichereinrichtung nach einem der Ansprüche 8 bis 13, **dadurch gekennzeichnet,** daß der Spur-Schreibkopf (40, 57) als Dünnschicht-Struktur ausgebildet ist.

15. Speichereinrichtung nach einem der Ansprüche 9 bis 14, **dadurch gekennzeichnet,** daß die magneto-resistiven Teile des Servo-Kopfes (20, 28) in demselben, parallel zu der Längsseite (21) des Flugkörpers (13) verlaufenden ebenen Bereich wie ein Spalt (55) liegt, der zwischen der Speicherplatte (2) zugewandten Polspitzen (P1, P2) der Polschenkel (41, 42; 62, 63) ausgebildet ist.

16. Speichereinrichtung nach einem der Ansprüche 9 bis 14, **dadurch gekennzeichnet,** daß die magneto-resistiven Teile des Servo-Kopfes (20, 28) in einer parallel zu der Längsseite (21) des Flugkörpers (22) verlaufenden ersten Ebene und ein Spalt (55) in einer weiteren, dazu parallelen Ebene angeordnet sind, wobei der Spalt zwischen der Speicherplatte (2) zugewandten Polspitzen (P1, P2) der Polschenkel (41, 42; 62, 63) ausgebildet ist (Figur 16).

17. Speichereinrichtung nach einem der Ansprüche 8 bis 16, **dadurch gekennzeichnet,** daß der ServoKopf (20, 28) und der Spur-Schreibkopf (40, 57) auf einer gemeinsamen Substratebene angeordnet sind.

18. Speichereinrichtung nach einem der Ansprüche 8 bis 16, **dadurch gekennzeichnet,** daß der ServoKopf (20, 28) und der Spur-Schreibkopf (40, 57) auf unterschiedlichen Substratebenen angeordnet sind.

FIG 1

FIG 2

FIG 3

EP 0 304 695 A1

87 P 3292

87 P 3292

FIG 4

8d 8c 2

9a 9b

13

21

17 16 18

22 U

14 15 20

FIG 5

21

20

8a 8b

9a 9b

8 2

FIG 6

I I

26 27

M

I

20 B

23 24 α L

FIG 7

87 P 3292

FIG 8

FIG 9

FIG 10

87 P 3292

XIII

13

21

40

43

42

41

B'

16

47

27

18

33

26

40

45

30

U

31

28

XIII

15

**FIG 11**

42

26    31    33         27                    45

49

30                    41

U'

13 (15)

**FIG 12**

87 P 3292

FIG 13

FIG 14

FIG 15

FIG 16

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | IBM TECHNICAL DISCLOSURE BULLETIN, Band 17, Nr. 4, September 1974, Seiten 979-980, Armonk, N.Y., US; W. McCORMICK: "Multielement servoing head" * Seite 979, erster Abschnitt, Anfang - Seite 980, zweiter Abschnitt, Anfang; Figuren * | 1 | G 11 B 5/596 G 11 B 5/48 |
| A | IDEM --- | 7 | |
| Y | JP-A-62 121 917 (NEC CORP.) * Ganzes Dokument * | 1 | |
| A | --- | 7 | |
| A | WO-A-8 606 864 (EASTMAN KODAK CO.) * Seite 3, Zeilen 1-20; Seite 4, Zeile 19 - Seite 5, Zeile 30; Figuren 1,2 * --- | 1,4,7 | |
| A | IBM TECHNICAL DISCLOSURE BULLETIN, Band 20, Nr. 9, Februar 1978, Seiten 3673-3674, Armonk, N.Y., US; D.R. McEFEE: "Read/write servo magnetic head" * Seite 3674, Abschnitt 2 * --- | 1 | RECHERCHIERTE SACHGEBIETE (Int. Cl.4) G 11 B |
| A | US-A-4 642 709 (VINAL) * Spalte 3, Zeilen 22-37; Spalte 7, Zeilen 8-33; Spalte 10, Zeile 58 - Spalte 11, Zeile 12; Spalte 14, Zeilen 9-66; Spalte 15, Zeilen 60-62; Figuren 1,2A,2B,2C,5,6 * --- -/- | 1,2,4,7 -9,14, 17 | |

Der vorliegende Recherchenbericht wurde für alle Patentansprüche erstellt

| Recherchenort | Abschlußdatum der Recherche | Prüfer |
|---|---|---|
| DEN HAAG | 24-11-1988 | FUX J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen.Teile | Betrifft Anspruch | KLASSIFIKATION DER ANMELDUNG (Int. Cl.4) |
|---|---|---|---|
| A | IBM TECHNICAL DISCLOSURE BULLETIN, Band 23, Nr. 12, Mai 1981, Seite 5555, Armonk, N.Y., US; J.H. NAYAK: "Radial field buried-servo scheme" * Ganzes Dokument * --- | 1 | |
| A | IBM TECHNICAL DISCLOSURE BULLETIN, Band 19, Nr. 11, April 1977, Seiten 4226-4227, Armonk, N.Y., US; J. SCHNEIDER et al.: "On-data-track servoing" * Seite 4226, letzter Abschnitt Anfang - Seite 4227, zweiter Abschnitt Ende; Figuren 1,2 * --- | 1,2 | |
| A | PATENT ABSTRACTS OF JAPAN, Band 6, Nr. 152 (P-134) [1030], 12. August 1982, Seite 103 P 134; & JP-A-57 71 525 (MATSUSHITA DENKI SANGYO K.K.) 04.05.1982 * Ganzes Dokument * --- | 1,2,4 | RECHERCHIERTE SACHGEBIETE (Int. Cl.4) |
| A | FR-A-2 308 158. (N.V. PHILIPS' GLOEILAMPENFABRIEKEN) * Seite 8, Zeilen 3-25; Figur 7 * --- | 1,5-7 | |
| A | PATENT ABSTRACTS OF JAPAN, Band 8, Nr. 169 (P-292) [1606], 4. August 1984, Seite 28 P 292; & JP-A-59 63 007 (MATSUSHITA DENKI SANGYO K.K.) 10.04.1984 * Ganzes Dokument * ----- | 2,9,10, 13,14 | |

Der vorliegende Recherchenbericht wurde für alle Patentansprüche erstellt

| Recherchenort | Abschlußdatum der Recherche | Prüfer |
|---|---|---|
| DEN HAAG | 24-11-1988 | FUX J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument

EPO FORM 1503 03.82 (P0403)